(19) **Europäisches Patentamt**

**European Patent Office**

**Office européen des brevets**

(11) **EP 1 569 401 A1**

(12) **EUROPEAN PATENT APPLICATION**
published in accordance with Art. 158(3) EPC

(43) Date of publication:
31.08.2005 Bulletin 2005/35

(51) Int Cl.7: **H04L 27/00**

(21) Application number: **03811122.5**

(86) International application number:
**PCT/JP2003/014331**

(22) Date of filing: **11.11.2003**

(87) International publication number:
**WO 2004/045177 (27.05.2004 Gazette 2004/22)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **11.11.2002 JP 2002327430**

(71) Applicant: **MATSUSHITA ELECTRIC INDUSTRIAL CO., LTD.**
**Osaka 571-8501 (JP)**

(72) Inventors:
• **IMAMURA, Daichi**
**Yokosuka-shi, Kanagawa 239-0843 (JP)**
• **HIRANO, Jun**
**Yokosuka-shi, Kanagawa 239-0843 (JP)**

(74) Representative: **Grünecker, Kinkeldey, Stockmair & Schwanhäusser Anwaltssozietät**
**Maximilianstrasse 58**
**80538 München (DE)**

(54) **RADIO COMMUNICATION APPARATUS AND RADIO COMMUNICATION METHOD**

(57) With the enhancement of communication throughput in each transmitting and receiving station according to the fading fluctuation velocity between transmitting stations and receiving stations as the object, signal transmitted from a radio communication apparatus of another party is received by antenna 9 and reception RF section 1, channel time variation detection section 3 detects the time variation amount of channel response using this received signal, and pilot signal insertion interval determination section 4 determined insertion interval of the pilot signals using the detected time variation amount of channel response. Then, based on this determined insertion interval, transmission section 5 inserts pilot signals into information signals to be transmitted and transmits the information signals into which pilot signals have been inserted to the radio communication apparatus of another party, thereby making possible the transmission of information signals based on pilot signal insertion interval optimum for the relevant propagation channel, determined from the detected result of time variation amount of channel response, and enhancement of communication throughput by eliminating redundant pilot signals.

FIG. 1

**Description**

TECHNICAL FIELD

The present invention relates to a radio communication apparatus and a radio communication method which implements a communication method wherein pilot symbols are inserted into transmission data and compensation for amplitude and phase variation is performed.

BACKGROUND ART

In recent years, multi-level quadrature amplitude modulation systems such as 16-QAM (Quadrature Amplitude Modulation) and 64-QAM which require coherent detection have been implemented to enhance transmission rate in digital mobile radio communication systems for Wireless LAN (Local Area Network), land mobile communication systems, etc. In digital mobile radio communication which is accompanied by movement of transmitting and receiving stations and surroundings, performance are significantly deteriorated due to fading wherein the amplitude and phase of received signals variation. Therefore, in order to apply QAM to mobile radio communication, a system for effectively compensating amplitude/phase variation by fading of channel in received signals is necessary.

For this reason, in mobile radio communication, a method wherein pilot symbols (also referred to as pilot signals) are periodically inserted between information symbols at the transmitter side, and amplitude/phase variation compensation is performed in the complex baseband, based on the pilot symbol transmitted from the transmitter side, at the receiver side. Conventional communication methods such as this are, for example, described in Non-Patent Reference 1 below.

In particular, in existing Wireless LAN systems, land mobile communication systems, and digital terrestrial broadcasting systems, steps such as inserting pilot symbols periodically into data symbol sequences when transmitting or inserting pilot symbols into the front of the data symbol sequence to be transmitted are performed to estimate and compensate fading-induced amplitude/phase variation. At the receiver side, a method for estimating and compensating amplitude/phase variation induced by channel fading of received signals using the pilot symbols inserted periodically or at the front is implemented.

The insertion interval for these pilot symbols into the existing mobile communication systems is fixed to the highest value of fading time variation rate of the each system. In other words, with each system, the station with the fastest time variation of the channel fading is provided, and the pilot symbol insertion interval is fixed so that communication is possible even through this provided station.

In addition, disclosed in Patent Reference 1, below, is a technology wherein Doppler frequency is detected using pilot signals, the received signal quality of the information signal under the fading conditions are estimated by using the detected Doppler frequency and the signal quality of the pilot signal, and an appropriate modulation method for this reception condition can be implemented. Further disclosed in Patent Reference 2, below, is a technology which can implement pilot signal allocation patterns, which reduce insertion of pilot signals if the guard interval of an OFDM signal is short and increase the insertion of pilot signals if the guard interval is long, and switch these patterns depending on the length of the guard interval. Still further, disclosed in Patent Reference 3, below is an idea for enhancing transmission efficiency by adaptively changing the insertion interval and insertion amount of pilot symbols according to the state of channel.

Patent Reference 1 Japanese Patent Laid-Open Publication No. 2002-44168
Patent Reference 2 Japanese Patent Laid-Open Publication No. 11-284597 (paragraphs 0014, 0033, and 0034)
Patent Reference 3 Japanese Patent Laid-Open Publication No. 2001-339363 (paragraphs 0019, 0063, and 0064)
Non-Patent Reference 1
Sasaoka, Hideichi ed., "Mobile Communications" Chapter 5, Ohmsha Ltd., 1st Print of 1st Edition on May 25, 1998

However, in each systems such as Wireless LAN and land mobile communication implementing communication methods according to prior art, the pilot symbol insertion intervals are fixed. More specifically, the pilot symbol insertion intervals are constant regardless of the channel environment between the transmitter side and the receiver side, and therefore, in a system for high-speed mobility of the stations, for example, both stations which are moving at high-speeds and those which are at rest receive pilot symbols in the same pilot symbol insertion interval. On the other hand, the pilot symbols per se do not contain any user data, and therefore, the more pilot symbols are inserted, the lower data transmission efficiency becomes.

In this way, because pilot symbol insertion intervals are set according to the environment wherein time variation of channel fading is the fastest, pilot symbols are inserted and transmitted periodically according to the fastest time variation of the channel fading, even for receiving stations which can have a wider pilot symbol insertion interval such as receiving stations which are at rest or moving at a slower speed (namely, receiving stations which can have a longer cycle for receiving pilot symbols), for example. Therefore, the conventional systems particularly have a problem in that data transmission to receiving stations at rest or moving at slow speeds have poor spectrum efficiency.

In addition, although technology for enabling variations in pilot signal insertion intervals are disclosed in Patent Reference 2 and Patent Reference 3, there is no clear explanation of exactly how to detect the condition of the channel (channel), and therefore, highly accurate detection of the conditions of the channel is difficult and the viability of the inventions is extremely poor, even if referencing Patent Reference 2 and Patent Reference 3.

DISCLOSURE OF THE INVENTION

In light of the foregoing problems, the object of present invention is to provide a radio communication apparatus and a radio communication method which enhances communication throughput between each transmitting and receiving stations, according to the time variation rate of channel fading between transmitting and receiving stations.

In order to attain this foregoing object, the radio communication apparatus of the present invention is one which enables radio communication with communication terminal devices of another party, and comprises: a reception means for receiving signals transmitted from the communication terminal devices of another party; a channel time variation detection means for detecting the time variation amount of a channel response using the signals received by the reception means; and a pilot signal insertion interval determination means for determining pilot signal insertion intervals using the detected time variation amount of the channel response.

Through this construction, the pilot signal insertion interval can be determined accurately from the detected result of the time variation amount of the channel response.

Furthermore, the present invention comprises, in addition to the foregoing invention: a pilot signal insertion means for inserting pilot signals into information signals to be transmitted, based on the pilot signal insertion intervals determined by the pilot signal insertion interval determination means; and a transmission means for transmitting the information signals into which pilot signals have been inserted to a radio communication apparatus of another party.

Through this construction, pilot signals can be inserted in pilot signal insertion intervals optimum for the channel condition, based on the pilot signal insertion intervals determined from the detected result of the time variation amount of the channel response and transmitted, and communication throughput can be improved by eliminating redundant pilot signals.

Still further, the present invention comprises, in addition to the foregoing invention: an information signal division means for dividing information signals to be transmitted based on the pilot signal insertion intervals determined by the pilot signal insertion interval determination means; a pilot signal insertion means for inserting pilot signals into post-division information signals which have been divided by the information signal division means; and a transmission means for transmitting the information signals into which pilot signals have been inserted to a radio communication apparatus of another party.

Through this construction, in regards to information signals which have been divided at MAC (Media Access Control) layers, for example, pilot signals can be inserted according to pilot signal insertion intervals optimum for the channel condition at the physical layer (also referred to as PHY) based on the pilot signal insertion interval determined from the detected result of the time variation amount of the channel response and transmitted, and communication throughput can be improved by eliminating redundant pilot signals.

Still further, the present invention comprises, in addition to the foregoing invention: an information signal division means for dividing information signals to be transmitted; an information signal processing means for processing post-division information signals which have been divided by the information signal division means; an information signal merging means for merging post-division information signals which have been processed by the information signal processing means; a pilot signal insertion means for inserting pilot signals into information signals which have been merged by the information signal merging means, based on the pilot signal insertion interval determined by the pilot signal insertion interval determination means; and a transmission method transmitting the information signals into which pilot signals have been inserted to a radio communication apparatus of another party.

Through this construction, in regards to information signals which have been divided at MAC layers, for example, pilot signals can be inserted in pilot signal insertion intervals optimum for the channel condition at the physical layer based on the pilot signal insertion interval determined from the detected result of the time variation amount of the channel response and transmitted, thereby enabling improvement of communication throughput by eliminating redundant pilot signals and further improvement of communication throughput by eliminating intervals with no signals between packets which are generated when transmitted as divided packets.

Still further, the present invention comprises, in addition to the foregoing invention, a division length determination means for determining the division length of the information signals in the information signal division means, and this division length determination means is constructed to enable determination of information signal division length using the time variation amount of a channel response.

Through this construction, even the division length in MAC division which is performed at the MAC layer can be made to be dependent on the time variation amount of a channel response.

Still further, the present invention comprises, in addition to the foregoing invention: a first information signal division means for dividing information signals to be transmitted; an information signal processing means for processing post-division information signals which have been divided by the information signal division means; an information signal merging means for merging post-division information signals processed by the information signal processing means; a second information signal division means for dividing information signals merged by the information signal merging means, based on the pilot signal insertion interval determined by the pilot signal insertion interval determination means; a pilot signal insertion means for inserting pilot signals into post-division information signals which have been divided by the second information signal division means; and a transmission means for transmitting information signals into which pilot signals have been inserted to a radio communication apparatus of another party.

Through this construction, in regards to information signals which have been divided at MAC layers, for example, pilot signals can be inserted in pilot signal insertion intervals optimum for the channel condition at the physical layer based on the pilot signal insertion interval determined from the detected result of the time variation amount of the channel response, and communication throughput can be improved by eliminating redundant pilot signals.

Still further, the present invention comprises, in addition to the foregoing invention, a division length determination means for determining the division length of the information signals in the first information signal division means, and the division length determination means is constructed to determine the division length of the information signals by using the time variation amount of the channel response.

Through this construction, even the division length in MAC division which is performed at the MAC layer can be made to be dependent on the time variation amount of the channel response.

Still further, the present invention comprises, in addition to the foregoing invention, a transmission means for transmitting pilot signal insertion intervals to notify the radio communication apparatus of another party of the pilot signal insertion interval determined by the pilot signal insertion interval determination means.

Through this construction, the pilot signal insertion interval determined from the detected result of the time variation amount of the channel response can be notified to other radio communication apparatuses.

Still further, in the present invention, in addition to the foregoing invention, the channel time variation detection means is constructed so as to detect the time variation amount of the channel response using signals known to both the transmitter side and the receiver side.

Through this construction, a highly accurate detection of the time variation amounts of channel responses can be performed using signals known to both the transmitter side and the receiver side.

Still further, in the present invention, in addition to the foregoing invention, the channel time variation detection means is constructed so as to detect the time variation amounts of channel responses using signals which are not known to at least one of either the transmitter side or the receiver side.

Through this construction, detection of the time variation amounts of channel responses can be performed by performing calculations of the time variation amount of channel responses by signals which are not known to at least one of either the transmitter side or the receiver side.

In addition, in order to attain the foregoing object, the radio communication method of the present invention is a method for a radio communication apparatus, which can perform radio communication with the communication terminal apparatus of another party, and comprises: a reception step for receiving signals transmitted from the radio communication apparatus of another party; a channel time variation detection step for detecting the time variation amount of a channel response using signals received in the reception step; and a pilot signal insertion interval determination step for determining the pilot signal insertion interval using the detected time variation amount of the channel response.

Through this, the pilot signal insertion interval can be determined accurately by the detected results of the time variation amount of the channel response.

Furthermore, the present invention comprises, in addition to the foregoing invention: a pilot signal insertion step for inserting pilot signals into the information signals to be transmitted, based on the pilot signal insertion interval determined in the pilot signal insertion interval determination step; and a transmission step for transmitting the information signals into which pilot signals have been inserted to the radio communication apparatus of another party.

Through this, pilot signals can be inserted in a pilot signal insertion interval optimum for the channel condition, based on the pilot signal insertion interval determined from the detected result of the time variation amount of the channel response and transmitted, and communication throughput can be improved by eliminating redundant pilot signals.

Still further, the present invention comprises, in addition to the foregoing invention: an information signal division step for dividing information signals to be transmitted based on pilot signal insertion intervals determined in the pilot signal insertion interval determination step; a pilot signal insertion means for inserting pilot signals into post-division information signals which have been divided in the information signal division step; and a transmission means for transmitting the information signals to which pilot signals have been inserted to a radio communication apparatus of another party.

Through this, in regards to information signals which have been divided at MAC layers, for example, pilot signals can be inserted in pilot signal insertion intervals optimum for the channel at the physical layer based on the pilot signal insertion interval determined from the detected result of the time variation amount of a channel response and transmitted, and communication throughput can be improved by eliminating redundant pilot signals.

Still further, the present invention comprises, in addition to the foregoing invention: an information signal division step for dividing information signals to be transmitted; an information signal processing step for processing post-division information signals which have been divided in the information signal division step; an information signal merging step for merging post-division information signals which have been processed in the information signal processing step; a pilot signal insertion means for inserting pilot signals into information signals which have been merged in the information signal merging step, based on the pilot signal insertion intervals determined in the pilot signal insertion interval determination step; and a transmission method transmitting the information signals into which pilot signals have been inserted to a radio communication apparatus of another party.

Through this construction, in regards to information signals which have been divided at MAC layers, for example, pilot signals can be inserted in pilot signal insertion intervals optimum for the channel condition at the physical layer based on the pilot signal insertion interval determined from the detected result of the time variation amount of the channel response and transmitted, thereby enabling improvement of communication throughput by eliminating redundant pilot signals and further enhancement of communication throughput by eliminating intervals with no signals between packets which are generated when transmitted as divided packets.

Still further, the present invention comprises, in addition to the foregoing invention, a division length determination step for determining the division length of the information signals in the information signal division means using the time variation amount of a channel response.

Through this construction, even the division length in MAC division which is performed at the MAC layer can be made to be dependent on the time variation amount of the channel response.

Still further, the present invention comprises, in addition to the foregoing invention: a first information signal division step for dividing information signals to be transmitted; an information signal processing step for processing post-division information signals which have been divided in the information signal division step; an information signal merging step for merging post-division information signals processed in the information signal processing step; a second information signal division step for dividing information signals merged by the information signal merging step, based on the pilot signal insertion interval determined in the pilot signal insertion interval determination step; a pilot signal insertion step for inserting pilot signals to post-division information signals which have been divided in the second information signal division step; and a transmission step for transmitting information signals into which pilot signals have been inserted to a radio communication apparatus of another party.

Through this construction, in regards to information signals which have been divided at MAC layers, for example, pilot signals can be inserted in pilot signal insertion intervals optimum for the channel condition at the physical layer based on the pilot signal insertion interval determined from the detected result of the time variation amount of the channel response, and communication throughput can be improved by eliminating redundant pilot signals.

Still further, the present invention comprises, in addition to the foregoing invention, a division length determination step for determining the division length of the information signals in the first information signal division step by using the time variation amount of a channel response.

Through this construction, even the division length in MAC division which is performed at the MAC layer can be made to be dependent on the time variation amount of a channel response.

Still further, the present invention comprises, in addition to the foregoing invention, a transmission step for transmitting pilot signal insertion interval to notify the radio communication apparatus of another party of the pilot signal insertion interval determined by the pilot signal insertion interval determination means.

Through this construction, the pilot signal insertion interval determined from the detected result of the time variation amount of a channel response can be notified to other radio communication apparatuses.

Still further, in the present invention, in addition to the foregoing invention, the channel time variation detection step is constructed so as to detect the time variation amounts of channel responses using signals known to both the transmitter side and the receiver side.

Through this construction, a highly accurate detection of time variation amounts of channel responses can be performed using signals known to both the transmitter side and the receiver side.

Still further, in the present invention, in addition to the foregoing invention, the channel time variation detection means is constructed so as to detect the time variation amounts of channel responses using signals which are not known to at least one of either the transmitter side or the receiver side.

Through this construction, detection of time variation amounts of channel responses can be performed by performing calculations of time variation amounts of channel responses by signals which are not known to at least one of either the transmitter side or the receiver side.

BRIEF DESCRIPTION OF THE DRAWINGS

FIG. 1 is a block diagram showing one example of the internal construction of a radio communication apparatus in a first embodiment of the present invention;

FIG. 2 is a block diagram showing one example of the internal construction of a radio communication apparatus in a second embodiment of the present invention;

FIG. 3A is a pattern diagram showing the structure of transmission data (data provided to MAC division section 11) provided from the upper layer within the radio communication apparatus in the second embodiment of the present invention;

FIG. 3B is a pattern diagram showing the structure of data after processing by MAC division section 11 within the radio communication apparatus in the second embodiment of the present invention;

FIG. 3C is a pattern diagram showing the structure of data after processing by PHY transmission section 12 within the radio communication apparatus in the second embodiment of the present invention;

FIG. 4 is a block diagram showing one example of the internal construction of a radio communication apparatus in a third embodiment of the present invention;

FIG. 5A is a pattern diagram showing the structure of transmission data (data provided to MAC division section 11) provided from the upper layer within the radio communication apparatus in the third embodiment of the present invention;

FIG. 5B is a pattern diagram showing the structure of data after processing by MAC division section 11 within the radio communication apparatus in the third embodiment of the present invention;

FIG. 5C is a pattern diagram showing the structure of data after processing by data merging section 13 within the radio communication apparatus in the third embodiment of the present invention;

FIG. 5D is a pattern diagram showing the structure of data after processing by PHY transmission section 12 within the radio communication apparatus in the third embodiment of the present invention;

FIG. 6 is a block diagram showing one example of the internal construction of a radio communication apparatus in a fourth embodiment of the present invention;

FIG. 7A is a pattern diagram showing the structure of transmission data (data provided to MAC division section 11) provided from the upper layer within the radio communication apparatus in the fourth embodiment of the present invention;

FIG. 7B is a pattern diagram showing the structure of data after processing by MAC division section 11 within the radio communication apparatus in the fourth embodiment of the present invention;

FIG. 7C is a pattern diagram showing the structure of data after processing by data merging section 13 within the radio communication apparatus in the fourth embodiment of the present invention;

FIG. 7D is a pattern diagram showing the structure of data after processing by PHY transmission section 12 within the radio communication apparatus in the fourth embodiment of the present invention;

FIG. 8 is a block diagram showing one example of the internal construction of a radio communication apparatus in a fifth embodiment of the present invention;

FIG. 9A is a pattern diagram showing the structure of transmission data (data provided to MAC division section 11) provided from the upper layer within the radio communication apparatus in the fifth embodiment of the present invention;

FIG. 9B is a pattern diagram showing the structure of data after processing by MAC division section 11 within the radio communication apparatus in the fifth embodiment of the present invention;

FIG. 9C is a pattern diagram showing the structure of data after processing by data merging section 13 within the radio communication apparatus in the fifth embodiment of the present invention;

FIG. 9D is a pattern diagram showing the structure of data after processing by data division section 14 within the radio communication apparatus in the fifth embodiment of the present invention;

FIG. 9E is a pattern diagram showing the structure of data after processing by PHY transmission section 12 within the radio communication apparatus in the fifth embodiment of the present invention;

FIG. 10 is a block diagram showing one example of the internal construction of a radio communication apparatus in a sixth embodiment of the present invention;

FIG. 11A is a pattern diagram showing the structure of transmission data (data provided to MAC division section 11) provided from the upper layer within the radio communication apparatus in the sixth embodiment of the present invention;

FIG. 11B is a pattern diagram showing the structure of data after processing by MAC division section 11 within the radio communication apparatus in the sixth embodiment of the present invention;

FIG. 11C is a pattern diagram showing the structure of data after processing by data merging section 13 within the radio communication apparatus in the sixth embodiment of the present invention;

FIG. 11D is a pattern diagram showing the structure of data after processing by data division section 14 within the radio communication apparatus in the sixth embodiment of the present invention;

FIG. 11E is a pattern diagram showing the structure of data after processing by PHY transmission section 12 within the radio communication apparatus in the sixth embodiment of the present invention;

FIG. 12 is a block diagram showing one example of the internal construction of a radio communication apparatus in a seventh embodiment of the present invention;

FIG. 13 is a pattern diagram showing one example of path variation when a receiving station according to the present invention is mobile;

FIG. 14 is a pattern diagram showing the time variation of the standard signal S received by the receiving station with the movement of the receiving station in FIG. 13;

FIG. 15 is a diagram explaining one example of the calculation of time variation amount of channel response within a channel time variation detection section 3 in the present invention and showing the clock time and the channel response parameter at this clock time; and

FIG. 16 is a diagram explaining one example of the calculation of time variation amount of channel response within a channel time variation detection section 3 in the present invention and showing the correlation between the clock time and the parameters indicating the channel response.

BEST MODE FOR CARRYING OUT THE INVENTION

Descriptions are hereinafter given of first to seventh embodiments of the present invention with reference to the drawings.

<First Embodiment>

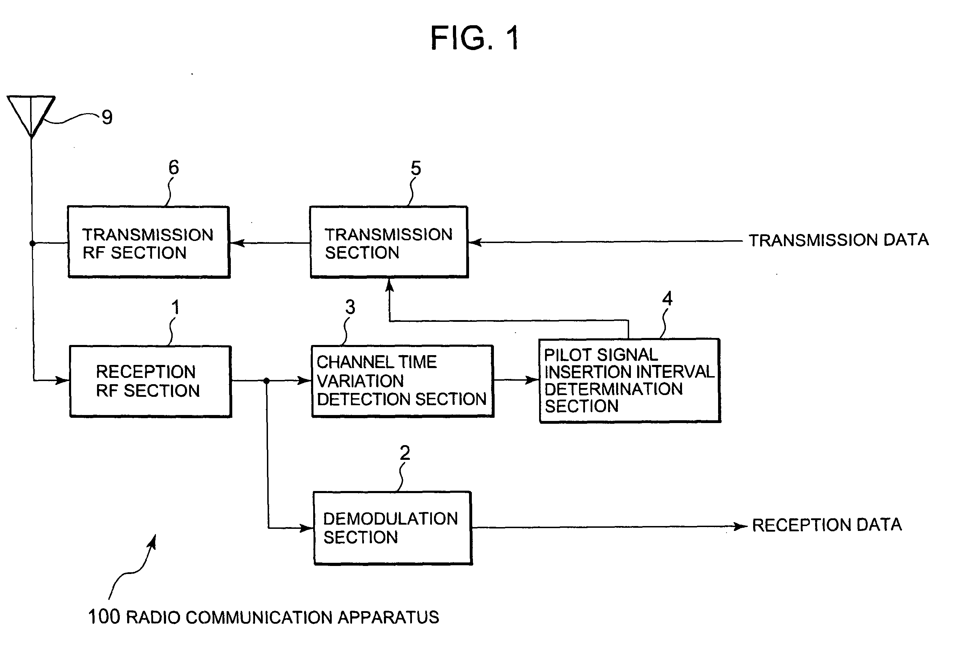

First, a first embodiment of the present invention is described. FIG. 1 is a block diagram showing one example of the internal construction of a radio communication apparatus in the first embodiment of the present invention. The radio communication apparatus 100 shown in FIG. 1 comprises: a reception RF section 1; a demodulation section 2; a channel time variation detection section 3; a pilot signal insertion interval determination section 4; a transmission section 5; and a transmission RF section 6.

The reception RF section 1 converts a radio signal received from a propagation channel by an antenna 9 into a signal which can be processed at the physical layer and provides the converted signal to the demodulation section 2 and the channel time variation detection section 3. The demodulation section 2 performs demodulation processing on the signal provided from reception RF section 1 and outputs the demodulated signal to the upper layer as reception data.

At the same time, the channel time variation detection section 3 detects the time variation amount of channel response using the signal provided by the reception RF section 1. The detected result of the time variation amount of channel response detected by the channel time variation detection section 3 is provided to the pilot signal insertion interval determination section 4, and the pilot signal insertion interval determination section 4 determines the pilot signal (also referred to as pilot symbol) insertion interval optimum for the channel condition for communication with a radio communication apparatus of another party which is the transmission source of the received and analyzed received signal. Determination of the pilot signal insertion interval can also be reworded as determination of the data length or interval between frames contained within the pilot signals.

The time variation amount of channel response can be detected by referring to two or more same pilot symbols (pilot signals) comprised within the received signal. For example, such as in a radio communication system which uses a plurality of consecutive pilot symbols (pilot signals), the pilot signals are inserted consecutively within a transmission signal, and the time variation amount of channel response can be detected from this series of pilot signals. In addition, in OFDM (Orthogonal Frequency Division Multiplexing), a signal of the same waveform is used repeatedly within the pilot signal, and the time variation amount of channel response can be detected by referencing this signal of the same waveform.

Furthermore, detection accuracy can be improved by using the average of a plurality (three or more) of the same signals or by detecting plural time variation amounts of channel responses and using the average of these plural detected results.

Here, the time variation amount of channel response (the amount of fluctuation of a propagation channel response per unit time) detected by the channel time variation detection section 13 is explained in detail. When a signal is transmitted from the transmitting station to the receiving station in time t, if the sent signal is s(t), the received signal r(t) can be expressed as:

**Expression 1**

$$r(t) = \sum_{l=1}^{L} \left( A_l(t) e^{-j\theta_l(t)} \cdot s(t) \right), \qquad l = 1, 2, \cdots, L$$

Here, $A_1(t)$ and $\theta_1(t)$ are, respectively, the amplitude response and the phase response of the channel at time t, and 1 is the number of paths leading from the transmitting station to the receiving station (number of paths L, herein).

If the transmission station and receiving station does not move and the environment in which they are installed does not vary temporally (for example, they are set in an environment in which obstructions are not generated on the path), $A_1(t)$ and $\theta_1(t)$ are constant and channel attributes do not vary temporally. However, if the spatial location of one or a multiple out of the transmitting station, receiving station, and surrounding environments (reflectors and blockers) changes according to time, $A_1(t)$ and $\theta_1(t)$ are determined to vary temporally because the path and distance of the signal arriving from the transmitting station to the receiving station varies according to the time variations thereof.

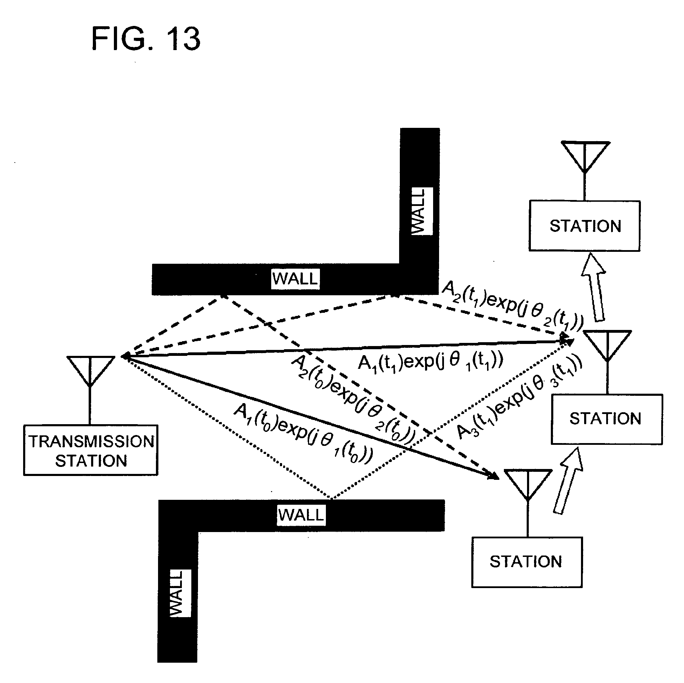

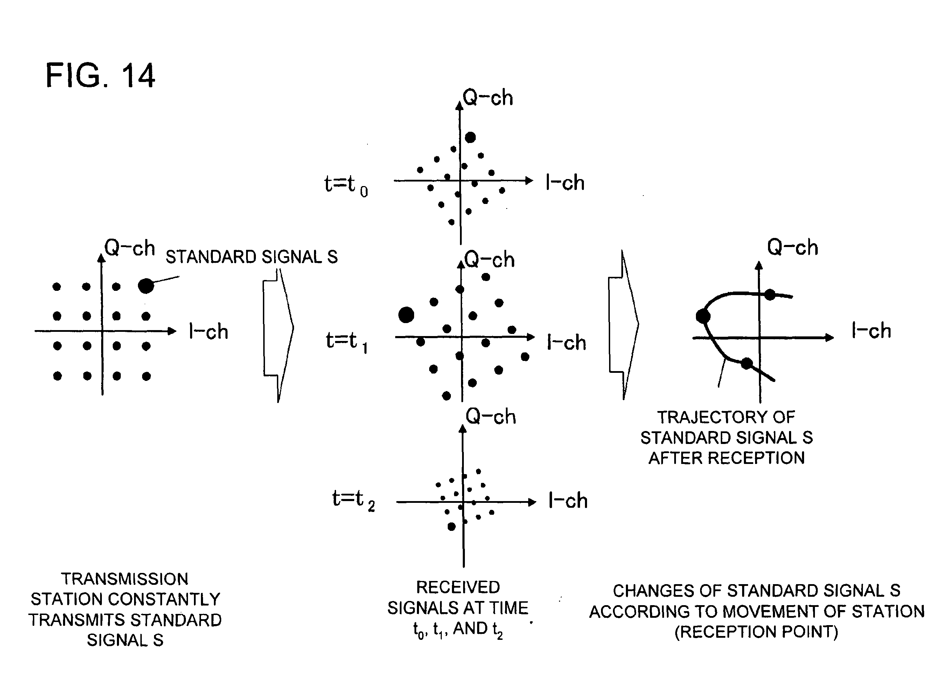

FIG. 13 is a pattern diagram showing one example of a path variation when a receiving station according to the present invention moves, and FIG. 14 is a pattern diagram showing the time variation of the standard signal S received by the receiving station with the movement of the receiving station in FIG. 13. As shown in FIG. 14, the standard signal S received by the receiving station varies significantly with the movement of the receiving station.

If the signal $s(t_0)$ sent from the transmitting station in time to passes a plurality of paths and a lag (delay) occurs in the arrival time to the receiving station, $A_1(t)$ and $\theta_1(t)$ are parameters $A_1(t,f)$ and $\theta_1(t,f)$ which are dependent on not only time t, but also frequency f. However, in the present specification, influence by frequency f will be disregarded..

Time variation amount of channel response is the amount of variation of a channel response per unit time and is one or a combination of a multiple of (1) to (5) below. The channel time variation detection section 3 performs the calculations for these variation amounts and outputs the calculated results.

(1) variation amount of amplitude of a channel response ⋯ dr/dt
(2) variation amount of phase of a channel response ⋯ dθ/dt
(3) variation amount of I-ch of a channel response ⋯ di/dt
(4) variation amount of Q-ch of a channel response ⋯ dq/dt
(5) Doppler frequency ⋯ $f_D$

(1) and (2) are handled by polar coordinate system (r, θ), and (3) and (4) by polar coordinate system (i, q)

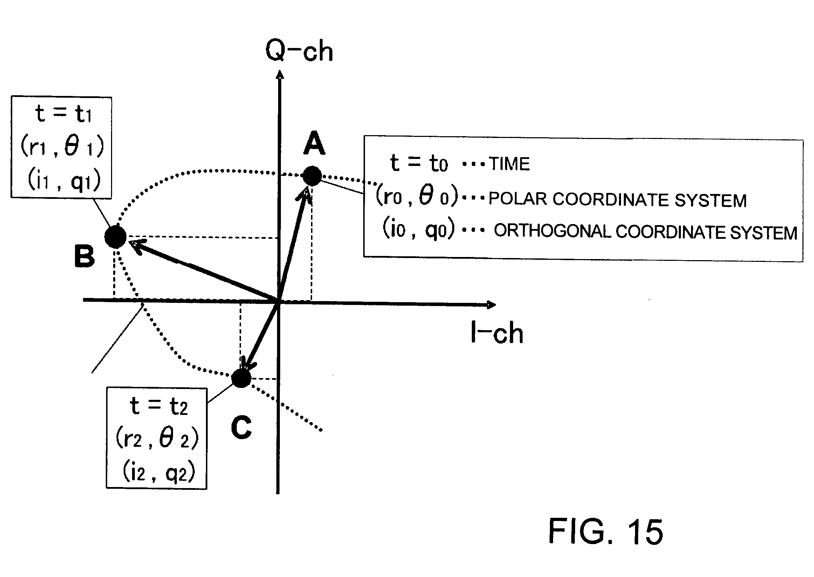

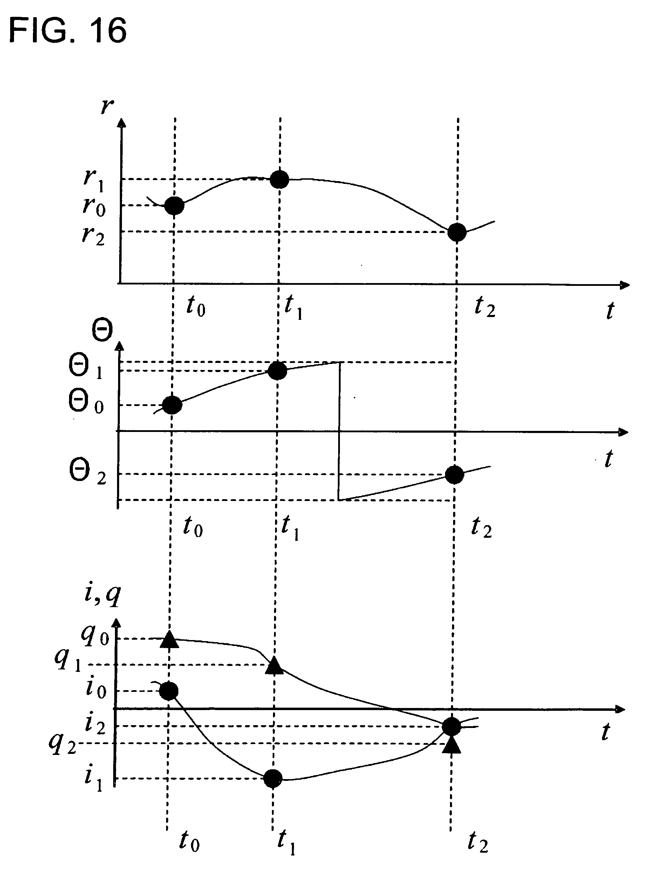

Next, one example of the calculation of time variation amount of a channel response in the channel time variation detection section 3 is explained. FIG. 15 is a diagram for explaining an example of the calculation of time variation amount of a channel response in the channel time variation detection section 3 according to the present invention and shows the correlation between time and the parameters indication channel response. FIG. 16 is a diagram for explaining an example of the calculation of time variation amount of a channel response in the channel time variation detection section 3 according to the present invention and shows the time and the parameters indication channel response at the time.

As shown in FIG. 15, if the standard signal point in the receiving station end transits from A to B to C, the time variations of the amplitude, phase, I-ch, and Q-ch of the channel response are as shown in FIG. 16, for example. At this time, (1) variation amount of amplitude of a channel response can be determined by $dr/dt = (r_n - r_{n-1})/(t_n - t_{n-1})$; (2) variation amount of phase of a channel response can be determined by $d\theta/dt = (\theta_n - \theta_{n-1})/(t_n - t_{n-1})$; (3) variation amount of I-ch of a channel response can be determined by $di/dt = (i_n - i_{n-1})/(t_n - t_{n-1})$; and (4) variation amount of Q-ch of a channel response can be determined by $dq/dt = (q_n - q_{n-1})/(t_n - t_{n-1})$. Although these calculation examples simply determine the variation amounts between two time instants (between $t_n$ and $t_{n-1}$), averaging of values obtained from several more time instants, processing for weighting average, etc. can be performed as well. In addition, the mean variation amount of I element and Q element or the parameter with the largest variation can be deemed to be the final result, as well.

As described above, the pilot signal insertion interval determination section 4 determines the insertion interval for pilot signals by receiving the detected results (time variation amount of a channel response) detected by the channel time variation amount detection section 3. At this time, the simplest method for determining the pilot interval is one wherein the time variation amount of channel response is determined to be greater or smaller than a predetermined threshold. If the time variation amount of channel response is greater than the predetermined threshold, the pilot signal insertion interval is closer together, and if the time variation amount of a channel response is smaller than the predetermined threshold the pilot signal insertion interval is farther apart. In addition, the pilot signal insertion interval can be determined from the time variation amount of a channel response by referencing a predetermined correspondence chart which indicates the correspondence between the relevant detected results and the relevant insertion intervals, for example.

Furthermore, depending on the pilot insertion interval (combination with the modulation method) and the modulation method to be applied, the robustness in regards to time variation of the channel differs, and therefore, it is effective to vary the way pilot signal insertion intervals are changed according to the modulation method being used at the time. For example, in phase modulation methods such as BPSK (Binary Phase Shift Keying) and QPSK (Quadrature Phase Shift Keying), information is comprised only in the phase direction and not in the amplitude direction. Therefore, even if the time variation in the amplitude direction is large, if the phase variation amount per time unit is small, the pilot signal insertion interval can be wide.

At the same time, in a quadrature amplitude modulation system such as 16-QAM, pilot signal insertion intervals according to the variation amounts of both amplitude and phase must be determined because information is also comprised in the amplitude direction. In addition, in QAM, because information is carried in the amplitude direction of I-ch and Q-ch, implementation of the system in facilitated by calculating the time variation amount at orthogonal coordinate system (i,q) rather than determining the time variation amount at polar coordinate system (r, θ). Furthermore, even with the same quadrature amplitude modulation system, in 16-QAM and 64-QAM, if the time variation amount is the same, 64-QAM must have a shorter pilot signal insertion interval, in comparison to 16-QAM, because reception performance thereof is deteriorated due to fluctuation.

In this way, the pilot signal insertion intervals determined by the pilot signal insertion interval determination section 4 is provided to the transmission section 5, and the transmission section 5 performs processing for inserting pilot signals into transmission data, in adherence to this pilot signal insertion interval, and other transmission processes. Transmission RF section 6 converts data processed in and output from the transmission section 5 into radio signals and transmits the signals from antenna 9 in the direction of the propagation channel.

As described above, according to the first embodiment of the present invention, the radio communication apparatus 100 shown in FIG. 1 can, based on received signals, detect time variation amount of channel response, determine the insertion interval of the pilot signal to be sent subsequently using the detected time variation amount of channel response, insert pilot signals into data to be sent based on the determined pilot signal insertion interval, and perform transmission processing. More specifically, insertion of pilot signals according to the optimum pilot signal insertion interval determined based on time variation amount of channel response can be performed.

<Second Embodiment>

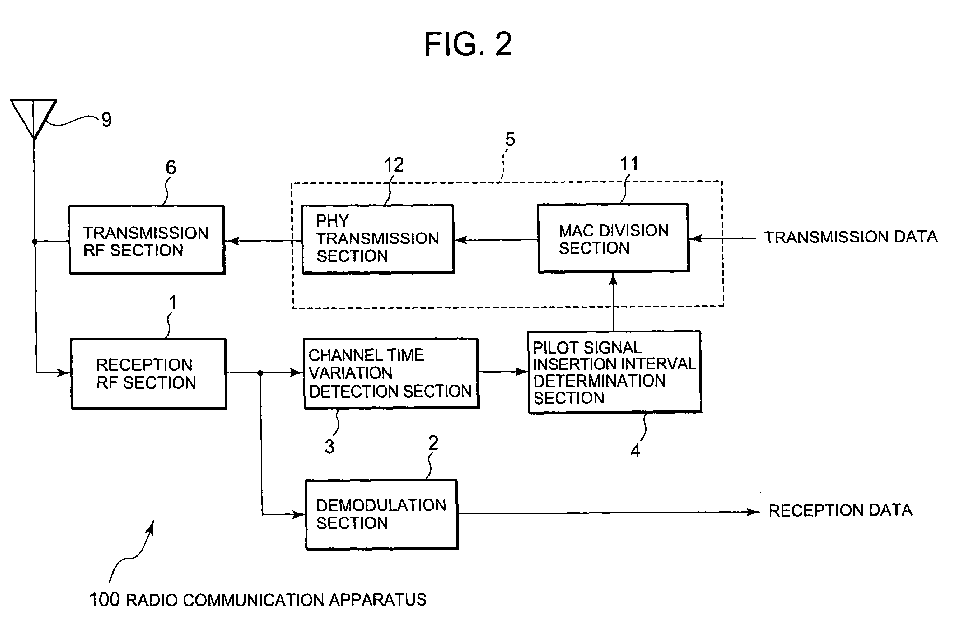

Next, a second embodiment of the present invention is described. FIG. 2 is a block diagram showing one example of the internal construction of a radio communication apparatus in the second embodiment of the present invention. The radio communication apparatus 100 shown in FIG. 2 comprises: a reception RF section 1; a demodulation section 2; a channel time variation detection section 3; a pilot signal insertion interval determination section 4; a transmission section 5 which comprises a MAC division section 11 and a PHY transmission section 12; and a transmission RF section 6. The second embodiment explains a detailed construction of the transmission section 5 according to the first embodiment, and the reception RF section 1, the demodulation section 2, the channel time variation detection section 3, the pilot signal insertion interval determination section 4, and the transmission RF section 6 are the same as that in the first embodiment.

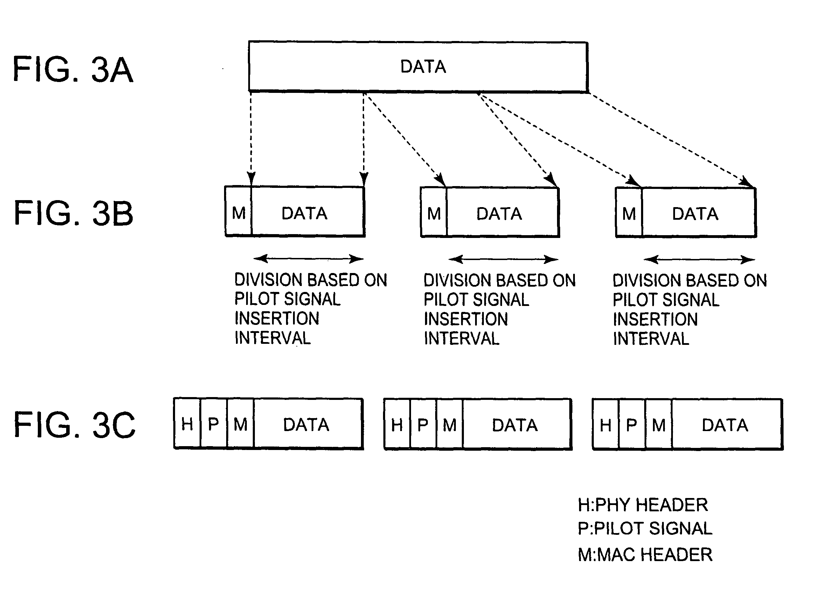

In addition, FIG. 3A to FIG. 3C are pattern diagrams showing the structure of data processed within the radio communication apparatus in the second embodiment of the present invention. FIG. 3A is a pattern diagram showing the structure of transmission data (data provided to MAC division section 11) provided from the upper layer; FIG. 3B is a pattern diagram showing the structure of data after processing by MAC division section 11; and FIG. 3C is a pattern diagram showing the structure of data after processing by PHY transmission section 12.

Transmission section 5 comprises MAC division section 11 and PHY transmission section 12, and the pilot signal insertion interval determined in the pilot signal insertion interval determination section 4 is connected so as to be provided to the MAC division section 11. First, the MAC division section 11 receives transmission data from the upper layer, performs division of the transmission data according to the pilot signal insertion interval determined in the pilot signal insertion interval determination section 4, and attached a MAC header. At this time, the processed data is structured as shown in FIG. 3B. For example, if the optimum value of the pilot signal insertion interval determined in the pilot signal insertion interval determination section 4 is L, it is preferable to make configurations so that the pilot signal insertion interval for the transmitted signal ultimately transmitted to the propagation channel is optimum, by taking into consideration the length $\alpha$ of the MAC header and the length $\beta$ of the PHY header, and making the division length of transmission data in the MAC division section 11 "L - $\alpha$ - $\beta$" or the like.

Then, transmission data processed in the MAC division section 11 is provided to a PHY transmission section 12. The PHY transmission section 12 performs transmission procedures such as processing for attaching a PHY header (preamble dependent on systems), and provides the processed data to the transmission RF section 6. At this time, the processed data is structured as shown in FIG. 3C. Transmission RF section 6 converts data processed by and output from the PHY transmission section 12 into radio signals, and transmits the signals from antenna 9 to the propagation channel.

As explained above, according to the second embodiment of the present invention, the radio communication apparatus 100 shown in FIG. 2 can, from time variation amount of channel response detected based on received signals, determine the insertion interval of the pilot signal to be sent subsequently, and after dividing data to be transmitted into optimum division lengths at the MAC layer based on the determined pilot signal insertion interval, insert pilot signals and perform transmission processing. Transmission data transmitted as such comprise a plurality of packets into which pilot signals have been inserted according to the optimum pilot signal insertion interval determined based on the time variation amount of channel response.

<Third Embodiment>

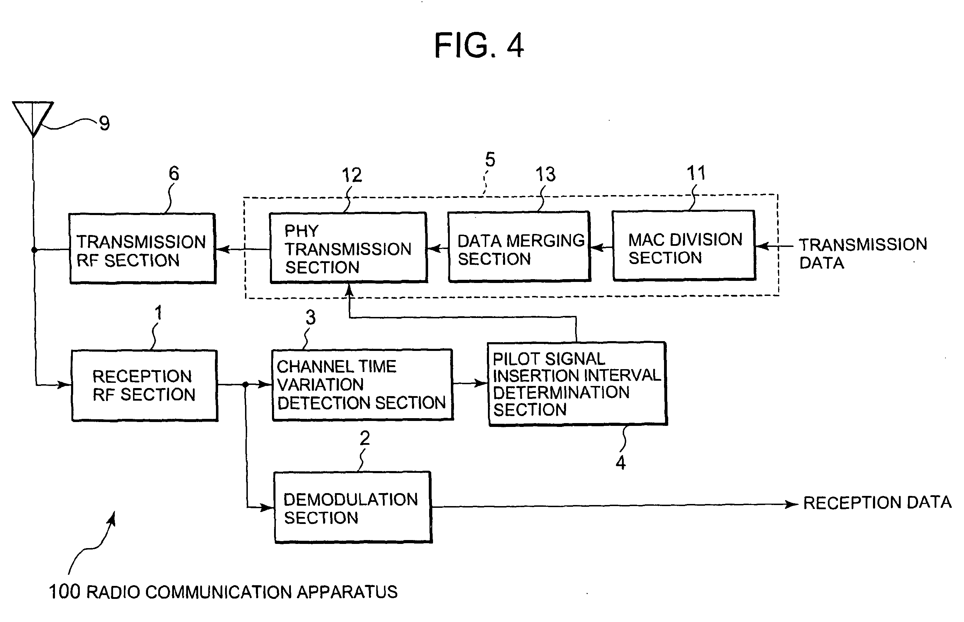

Next, a third embodiment of the present invention is described. FIG. 4 is a block diagram showing one example of the internal construction of a radio communication apparatus in the third embodiment of the present invention. The radio communication apparatus 100 shown in FIG. 4 comprises: a reception RF section 1; a demodulation section 2; a channel time variation detection section 3; a pilot signal insertion interval determination section 4; a transmission section 5 which comprises a MAC division section 11, a PHY transmission section 12, and a data merging section 13; and a transmission RF section 6. The third embodiment explains a detailed construction of the transmission section 5 according to the first embodiment, and the reception RF section 1, the demodulation section 2, the channel time variation detection section 3, the pilot signal insertion interval determination section 4, and the transmission RF section 6 are the same as that in the first embodiment.

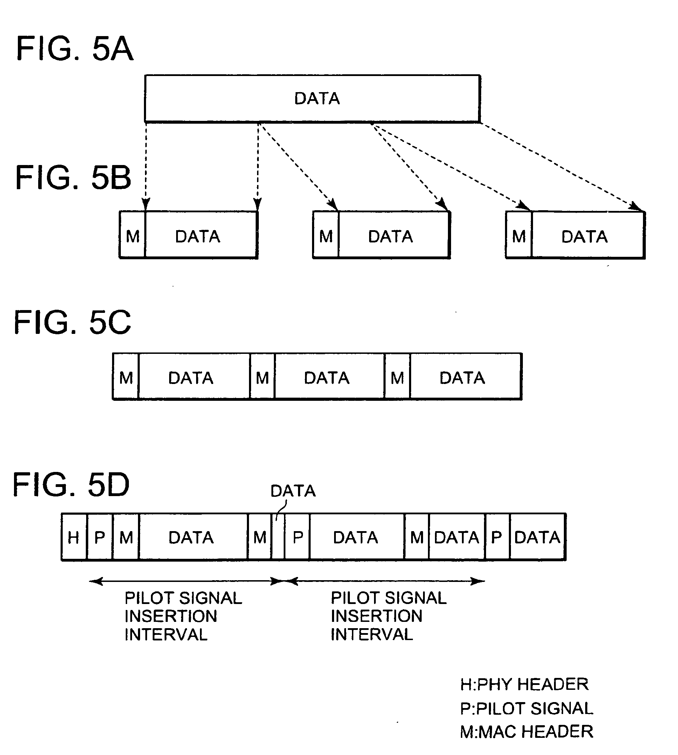

In addition, FIG. 5A to FIG. 5D are pattern diagrams showing the structure of data processed within the radio communication apparatus in the third embodiment of the present invention. FIG. 5A is a pattern diagram showing the structure of transmission data (data provided to MAC division section 11) provided from the upper layer; FIG. 5B is a pattern diagram showing the structure of data after processing by MAC division section 11; FIG. 5C is a pattern diagram showing the structure of data after processing by data merging section 13; and FIG. 5D is a pattern diagram showing the structure of data after processing by PHY transmission section 12.

The transmission section 5 comprises the MAC division section 11, the PHY transmission section 12, and the data merging section 13. The pilot signal insertion interval determined in the pilot signal insertion interval determination section 4 is connected so as to be provided to the PHY transmission section 12. First, the MAC division section 11 receives transmission data from the upper layer, performs division of the transmission data to optimize error rate and attaches a MAC header. At this time, the processed data is structured as shown in FIG. 5B. The cycle for inserting MAC header in MAC division section 11 can be determined without influence from the pilot signal insertion interval determined in the pilot signal insertion interval determination section 4.

Then, transmission data processed in the MAC division section 11 is provided to the data merging section 13. The data merging section 13 merges data, which had been divided during MAC header attachment, into one continuous string of data once again, and provides the merged data to PHY transmission section 12. At this time, the processed data is structured as shown in FIG. 5C. PHY transmission section 12 performs transmission procedures such as processing for inserting pilot signals into data received from the data merging section 13, according to the pilot signal insertion interval determined in the pilot signal insertion interval determination section 4, and processing for attaching a PHY header (preamble dependent on systems), and provides the processed data to the transmission RF section 6. At this time, the processed data is structured as shown in FIG. 5D. Transmission RF section 6 converts data processed by and output from the PHY transmission section 12 into radio signals, and transmits the signals from antenna 9 to the propagation channel.

As explained above, according to the third embodiment of the present invention, the radio communication apparatus 100 shown in FIG. 4 can, from time variation amount of channel response detected based on received signals, determine the insertion interval of the pilot signal to be sent subsequently, at the same time, rejoin data divided into desired division lengths at the MAC layer, and insert pilot signals into rejoined data according to the determined pilot signal insertion interval and perform transmission processing. Transmission data transmitted as such comprise one continuous string of data into which pilot signals have been inserted according to the optimum pilot signal insertion interval determined based on the time variation amount of channel response.

<Fourth Embodiment>

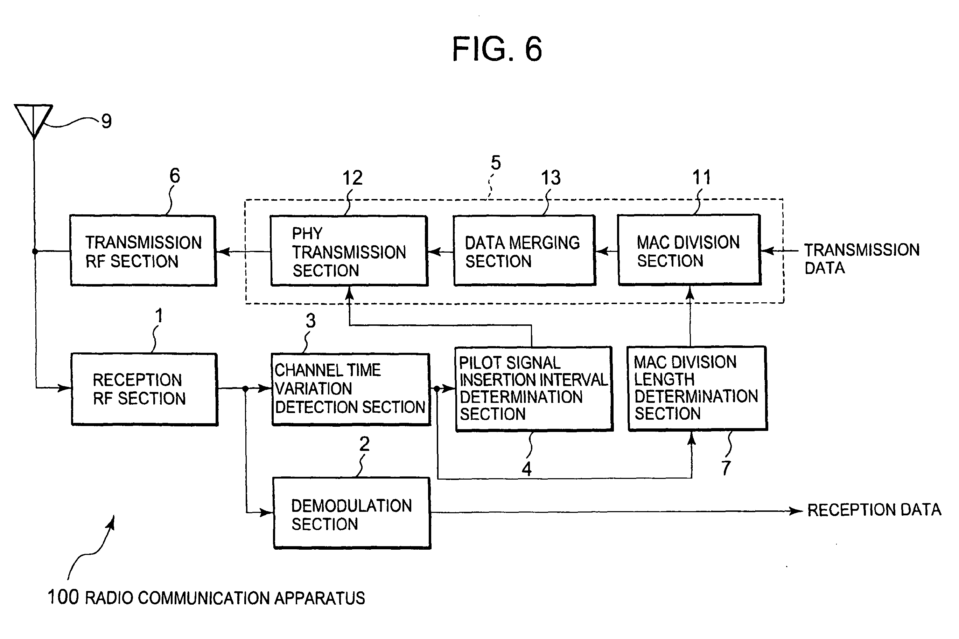

Next, a fourth embodiment of the present invention is described. FIG. 6 is a block diagram showing one example of the internal construction of a radio communication apparatus in the fourth embodiment of the present invention. The radio communication apparatus 100 shown in FIG. 6 comprises: a reception RF section 1; a demodulation section 2; a channel time variation detection section 3; a pilot signal insertion interval determination section 4; a MAC division length determination section 7; a transmission section 5 which comprises a MAC division section 11, a PHY transmission section 12, and a data merging section 13; and a transmission RF section 6. The fourth embodiment has a construction wherein the MAC division length determination section 7 is further added to that of the third embodiment, and the reception RF section 1, the demodulation section 2, the channel time variation detection section 3, the pilot signal insertion interval determination section 4, the transmission section 5, and the transmission RF section 6 are the same as that in the third embodiment.

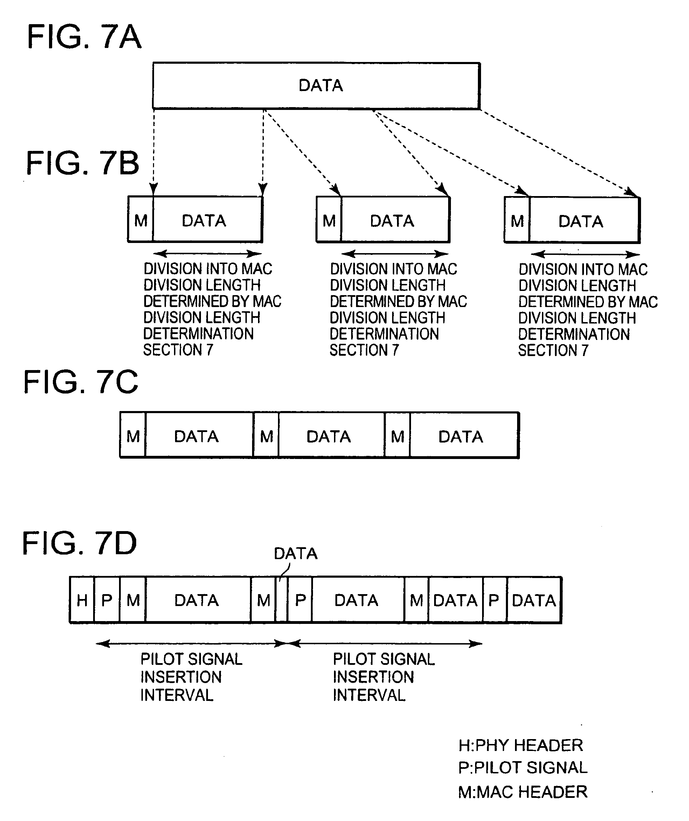

In addition, FIG. 7A to FIG. 7D are pattern diagrams showing the structure of data processed within the radio communication apparatus in the fourth embodiment of the present invention. FIG. 7A is a pattern diagram showing the structure of transmitted data (data provided to MAC division section 11) provided from the upper layer; FIG. 7B is a pattern diagram showing the structure of data after processing by MAC division section 11; FIG. 7C is a pattern diagram showing the structure of data after processing by data merging section 13; and FIG. 7D is a pattern diagram showing the structure of data after processing by PHY transmission section 12.

In the radio communication apparatus 100 shown in FIG. 6, the detected results of the time variation amount of channel response detected in the channel time variation detection section 3 is provided respectively to the pilot signal insertion interval determination section 4 and the MAC division length determination section 7. The MAC division length determination section 7 determines the length of data divided in the MAC division section 11. For example, the MAC division length can be determined according to the detected results of the time variation amount of channel response detected in the channel time variation detection section 3 and can also be determined by estimating other parameters such as error rates. Furthermore, MAC division length can be determined by a combination of a plurality of parameters or such as by implementing the shortest MAC division length out of those obtained from respective plural parameters. MAC division length determined by the MAC division length determination section 7 as such is provided to the MAC division section 11. The MAC division section 11 receives transmission data from the upper layer, performs division of the transmission data according to this MAC division length, and attaches a MAC header. At this time, the processed data is structured as shown in FIG. 7B.

Then, transmission data processed in the MAC division section 11 is provided to the data merging section 13. The data merging section 13 merges data, which had been divided during MAC header attachment, into one continuous string of data once again, and provides the merged data to PHY transmission section 12. At this time, the processed data is structured as shown in FIG. 7C. PHY transmission section 12 performs transmission procedures such as processing for inserting pilot signals into data received from the data merging section 13, according to the pilot signal insertion interval determined in the pilot signal insertion interval determination section 4, and processing for attaching a PHY header (preamble dependent on systems), and provides the processed data to the transmission RF section 6. At this time, the processed data is structured as shown in FIG. 7D. Transmission RF section 6 converts data processed by and output from the PHY transmission section 12 into radio signals, and transmits the signals from antenna 9 to the propagation channel.

As explained above, according to the fourth embodiment of the present invention the MAC division section 11 performs data division and MAC head attachment using, for example, MAC division length determined by the MAC division length determination section 7 from the time variation amount of channel response detected based on the received signal. The data merging section 13 merges these divided data, and at the same time, the pilot signal insertion interval determination section 4 determines the insertion interval of the pilot signal to be sent subsequently, and pilot signal insertion and transmission processing can be performed in PHY transmission section 12. Transmission data transmitted as such comprise one continuous string of data into which pilot signals have been inserted according to the optimum pilot signal insertion interval determined based on the time variation amount of channel response and divided into optimum MAC division lengths determined by the MAC division length determination section 7.

<Fifth Embodiment>

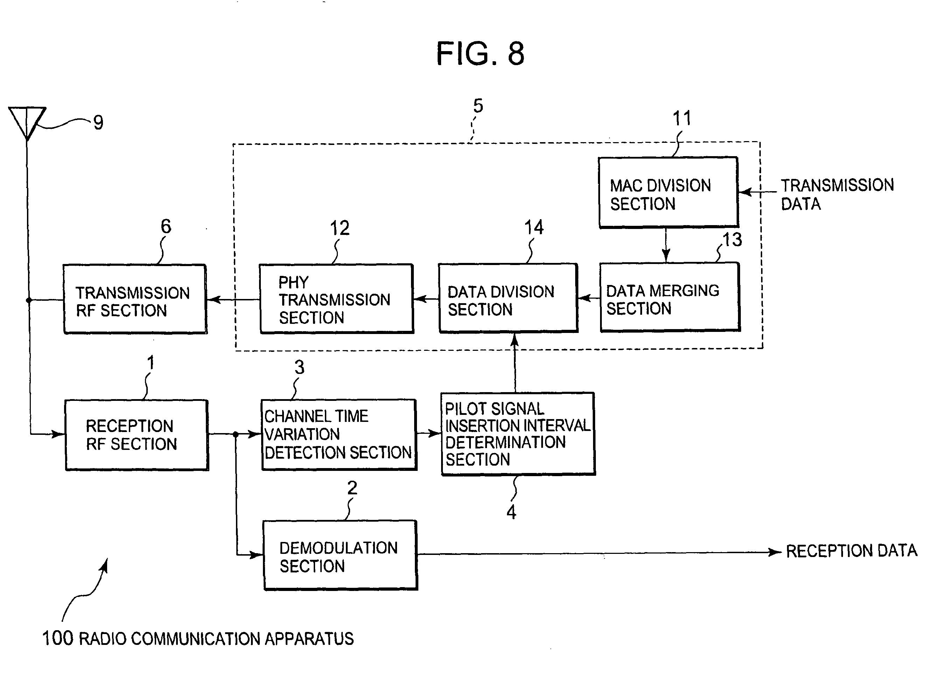

Next, a fifth embodiment of the present invention is described. FIG. 8 is a block diagram showing one example of the internal construction of a radio communication apparatus in the fourth embodiment of the present invention. The radio communication apparatus 100 shown in FIG. 8 comprises: a reception RF section 1; a demodulation section 2; a channel time variation detection section 3; a pilot signal insertion interval determination section 4; a transmission section 5 which comprises a MAC division section 11, a PHY transmission section 12, a data merging section 13, and a data division section 14; and a transmission RF section 6. The fifth embodiment explains a detailed construction of the transmission section 5 according to the first embodiment, and the reception RF section 1, the demodulation section 2, the channel time variation detection section 3, the pilot signal insertion interval determination section 4, and the transmission RF section 6 are the same as that in the first embodiment.

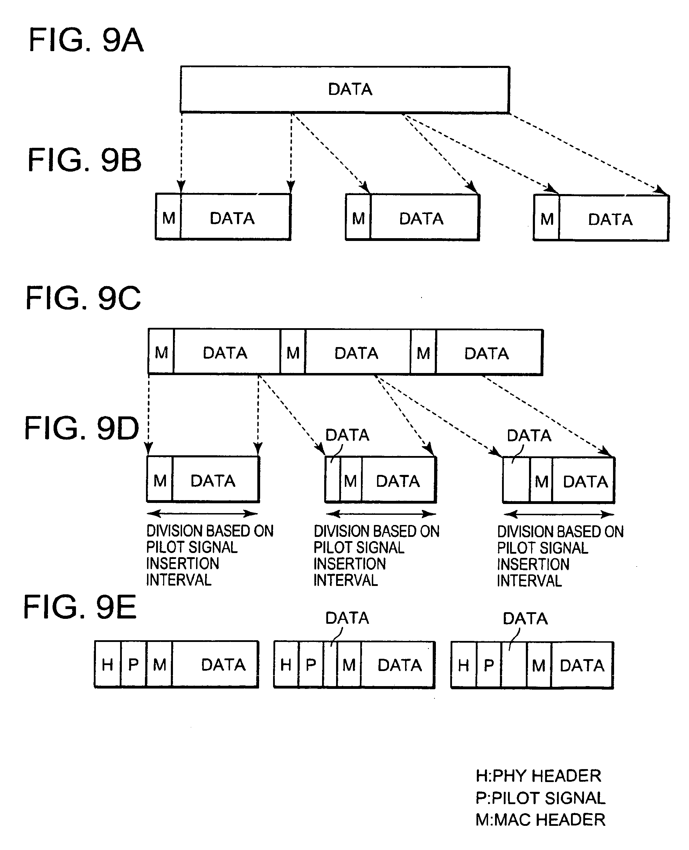

In addition, FIG. 9A to FIG. 9E are pattern diagrams showing the structure of data processed within the radio communication apparatus in the fifth embodiment of the present invention. FIG. 9A is a pattern diagram showing the structure of transmitted data (data provided to MAC division section 11) provided from the upper layer; FIG. 9B is a pattern diagram showing the structure of data after processing by MAC division section 11; FIG. 9C is a pattern diagram showing the structure of data after processing by data merging section 13; FIG. 9D is a pattern diagram showing the structure of data after processing by data division section 14; and FIG. 9E is a pattern diagram showing the structure of data after processing by PHY transmission section 12.

The transmission section 5 comprises the MAC division section 11, the PHY transmission section 12, the data merging section 13, and the data division section 14. The pilot signal insertion interval determined in the pilot signal insertion interval determination section 4 is connected so as to be provided to the data division section 14. First, the MAC division section 11 receives transmission data from the upper layer, performs division of the transmission data to optimize error rate and attaches a MAC header. At this time, the processed data is structured as shown in FIG. 9B. As in the second embodiment, the division of transmission data in MAC division section 11 is not influenced by the pilot signal insertion interval determined in the pilot signal insertion interval determination section 4.

Then, transmission data (a plurality of divided data) processed in the MAC division section 11 is sent to the data merging section 13. The data merging section 13 merges the plurality of divided data, and outputs this as one continuous string of data to the data division section 14. At this time, the processed data is structured as shown in FIG. 9C. The data division section 14 receives merged data from the data merging section 13 and performs data division according to the pilot signal insertion interval determined in the pilot signal insertion interval determination section 4. At this time, the processed data is structured as shown in FIG. 9D. For example, if the optimum value of the pilot signal insertion interval determined in the pilot signal insertion interval determination section 4 is L, it is preferable to make configurations so that the pilot signal insertion interval for the transmitted signal ultimately transmitted to the propagation channel is optimum, by taking into consideration the length $\beta$ of the PHY header, and making the division length of transmission data in the data division section 14 "L - $\beta$" or the like.

Then, transmission data which has undergone division processing in data division section 14 is provided to the PHY transmission section 12. PHY transmission section 12 performs transmission procedures such as processing for attaching a PHY header (preamble dependent on systems), and provides the processed data to the transmission RF section 6. At this time, the processed data is structured as shown in FIG. 9E. Transmission RF section 6 converts data processed by and output from the PHY transmission section 12 into radio signals, and transmits the signals from antenna 9 to the propagation channel.

As explained above, according to the fifth embodiment of the present invention, the radio communication apparatus 100 shown in FIG. 8 can, from time variation amount of channel response detected based on received signals, determine the insertion interval of the pilot signal to be sent subsequently, at the same time, rejoin data divided into desired division lengths at the MAC layer, and after dividing rejoined data into optimal division lengths according to the determined pilot signal insertion interval, insert pilot signals and perform transmission processing. Transmission data transmitted as such comprise a plurality of packets into which pilot signals have been inserted according to the optimum pilot signal insertion interval determined based on the time variation amount of channel response.

<Sixth Embodiment>

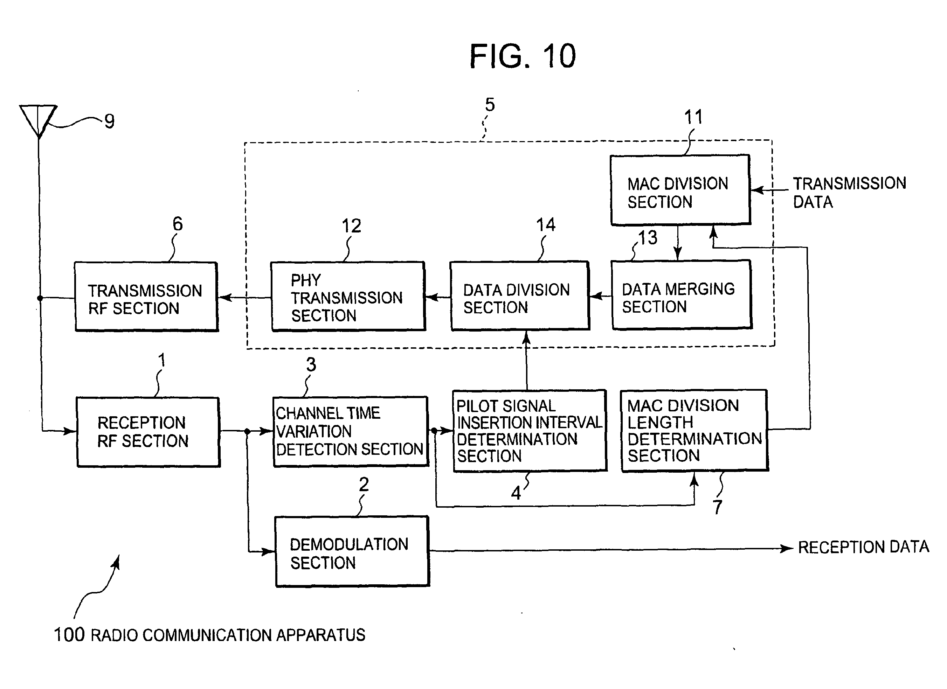

Next, a sixth embodiment of the present invention is described. FIG. 10 is a block diagram showing one example of the internal construction of a radio communication apparatus in the sixth embodiment of the present invention. The radio communication apparatus 100 shown in FIG. 10 comprises: a reception RF section 1; a demodulation section 2; a channel time variation detection section 3; a pilot signal insertion interval determination section 4; a MAC division length determination section 7; a transmission section 5 which comprises a MAC division section 11, a PHY transmission section 12, a data merging section 13, and a data division section 14; and a transmission RF section 6. The sixth embodiment has a construction wherein the MAC division length determination section 7 is further added to that of the fifth embodiment, and the reception RF section 1, the demodulation section 2, the channel time variation detection section 3, the pilot signal insertion interval determination section 4, the transmission section 5, and the transmission RF section 6 are the same as that in the fifth embodiment.

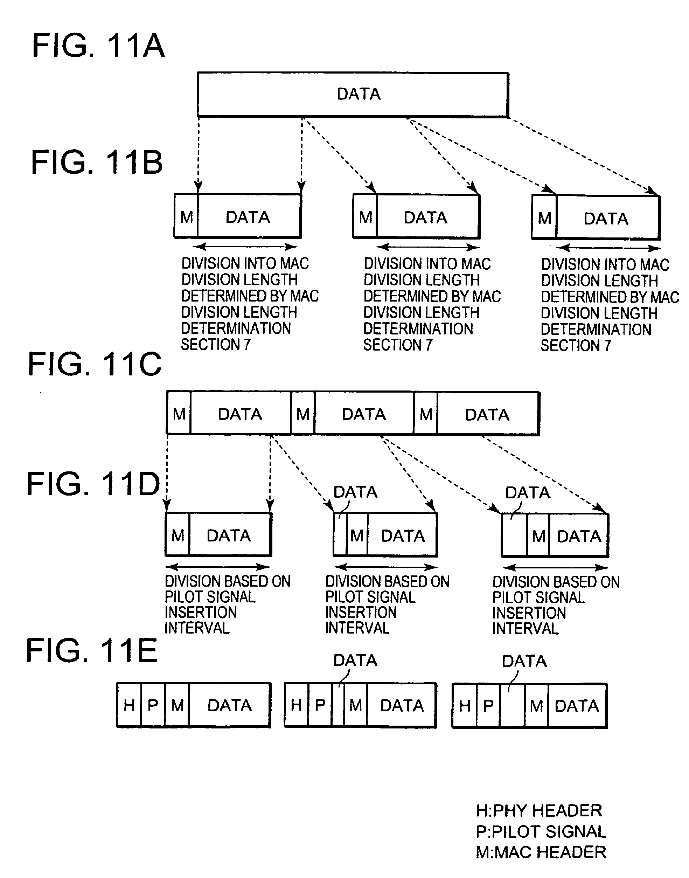

In addition, FIG. 11A to FIG. 11E are pattern diagrams showing the structure of data processed within the radio communication apparatus in the sixth embodiment of the present invention. FIG. 11A is a pattern diagram showing the structure of transmitted data (data provided to MAC division section 11) provided from the upper layer; FIG. 11B is a pattern diagram showing the structure of data after processing by MAC division section 11; FIG. 11C is a pattern diagram showing the structure of data after processing by data merging section 13; FIG. 11D is a pattern diagram showing the structure of data after processing by data division section 14; FIG. 11E is a pattern diagram showing the structure of data after processing by PHY transmission section 12.

In the radio communication apparatus 100 shown in FIG. 10, the detected results of the time variation amount of channel response detected in the channel time variation detection section 3 is provided respectively to the pilot signal insertion interval determination section 4 and the MAC division length determination section 7. The MAC division length determination section 7 determines the length of data divided in the MAC division section 11. For example, the MAC division length can be determined according to the detected results of the time variation amount of channel response detected in the channel time variation detection section 3 and can also be determined by estimating other parameters such as error rates. Furthermore, MAC division length can be determined by a combination of a plurality of parameters or such as by implementing the shortest MAC division length out of those obtained from respective plural parameters. MAC division length determined by the MAC division length determination section 7 as such is provided to the MAC division section 11. The MAC division section 11 receives transmission data from the upper layer, performs division of the transmission data according to this MAC division length, and attaches a MAC header. At this time, the processed data is structured as shown in FIG. 11B.

Then, transmission data (a plurality of divided data) processed in the MAC division section 11 is provided to the data merging section 13. The data merging section 13 merges the plurality of divided data and outputs this as one continuous string of data to the data division section 14. At this time, the processed data is structured as shown in FIG. 11C. The data division section 14 receives merged data from the data merging section 13 and performs data division according to the pilot signal insertion interval determined in the pilot signal insertion interval determination section 4. At this time, the processed data is structured as shown in FIG. 11D. For example, if the optimum value of the pilot signal insertion interval determined in the pilot signal insertion interval determination section 4 is L, it is preferable to make configurations so that the pilot signal insertion interval for the transmitted signal ultimately transmitted to the propagation channel is optimum, by taking into consideration the length $\beta$ of the PHY header, and making the division length of transmission data in the data division section 14 "L - $\beta$" or the like.

Then, transmission data which has undergone division processing in data division section 14 is provided to the PHY transmission section 12. PHY transmission section 12 performs transmission procedures such as processing for attaching a PHY header (preamble dependent on systems), and provides the processed data to the transmission RF section 6. At this time, the processed data is structured as shown in FIG. 11E. Transmission RF section 6 converts data processed by and output from the PHY transmission section 12 into radio signals, and transmits the signals from antenna 9 to the propagation channel.

As explained above, according to the sixth embodiment of the present invention, the MAC division section 11 performs data division and MAC head attachment using, for example, MAC division length determined by the MAC division length determination section 7 from the time variation amount of channel response detected based on the received signal. The data merging section 13 merges these divided data, and at the same time, the pilot signal insertion interval determination section 4 determines the insertion interval of the pilot signal to be sent subsequently, and after rejoined data is divided into optimal division lengths according to the determined pilot signal insertion interval by the data division section 14, pilot signal can be inserted and insertion and transmission processing can be performed. Transmission data transmitted as such comprise one continuous string of data into which pilot signals have been inserted according to the optimum pilot signal insertion interval determined based on the time variation amount of channel response and division at optimum MAC division length determined by the MAC division length determination section 7. Transmission data transmitted as such comprise a plurality of packets into which pilot signals have been inserted according to the optimum pilot signal insertion interval determined based on the time variation amount of channel response and divided into optimum MAC division lengths determined by the MAC division length determination section 7.

In the second, fifth, and sixth embodiments above, aspects wherein transmission data is divided into a plurality of packets, and one pilot signal is inserted into each divided packet is illustrated, as shown in FIG. 3A to FIG. 3C, FIG. 9A to FIG. 9E, and FIG. 11A to FIG. 11E. However, it does not necessarily a requisite to insert one pilot signal into one packet, and the insertion of plural pilot signals into one packet, the insertion of one pilot signal every plural packet, and the like is also possible. In addition, insertion of pilot signals can be further performed in insertion patterns implementing functions or the like. Furthermore, although in the third and fourth embodiments, aspects wherein pilot signals are inserted in even intervals into one continuous chain of transmission data are illustrated, as shown in FIG. 5A to FIG. 5D and FIG. 7A to FIG. 7D, insertion of pilot signals can be performed in various insertion patterns in these cases, as well.

<Seventh Embodiment>

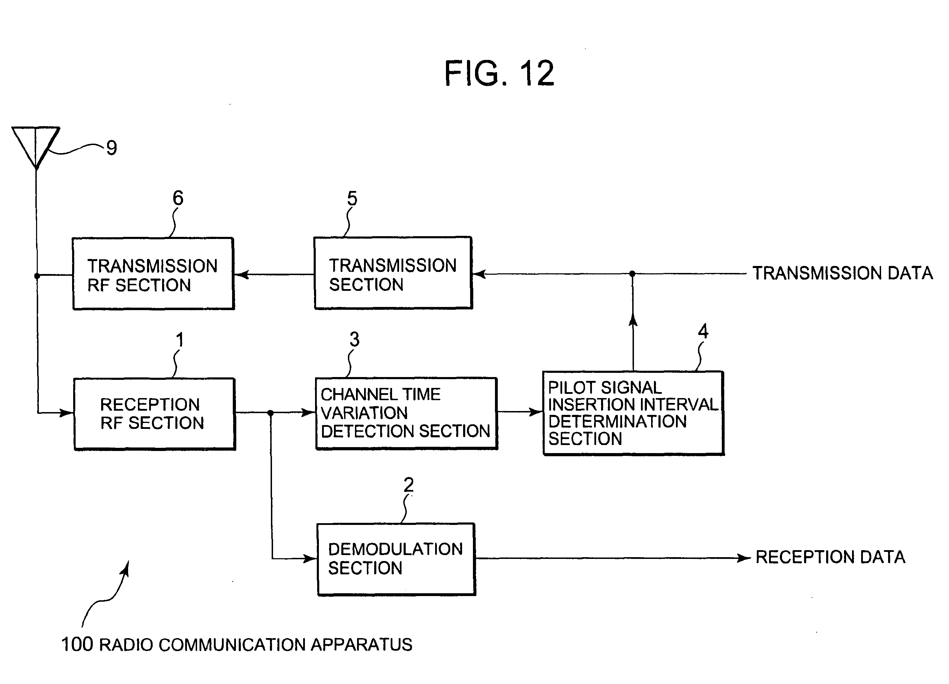

Next, a seventh embodiment of the present invention is described. FIG. 12 is a block diagram showing one example of the internal construction of a radio communication apparatus in the seventh embodiment of the present invention. The radio communication apparatus 100 shown in FIG. 12 comprises: a reception RF section 1; a demodulation section 2; a channel time variation detection section 3; a pilot signal insertion interval determination section 4; a transmission section 5; and a transmission RF section 6. Each constituent element according to the seventh embodiment has the same functions as the respective constituent elements according to the first embodiment.

Transmission section 5 comprises MAC division section 11 and PHY transmission section 12, and the pilot signal insertion interval determined in the pilot signal insertion interval determination section 4 is connected so as to be provided to the transmission section 5. In other words, the radio communication apparatus 100 shown in FIG. 12 can transmit the detected results of the time variation amount of channel response detected by the channel time variation detection section 3 as transmission data. In addition, although this is not illustrated, the detected results of the time variation amount of channel response detected by the channel time variation detection section 3 can be output to the upper layer and used in applications or stored to unillustrated storage means.

As explained above, according to the seventh embodiment of the present invention, the radio communication apparatus 100 shown in FIG. 12 can detect time variation amount of channel response based on a received signal, determine the insertion interval for the pilot signal to be transmitted subsequently using the detected time variation amount of channel response, and notify the determined pilot signal insertion interval to the radio communication apparatus of another party, store the determined pilot signal insertion interval, and the like.

INDUSTRIAL APPLICABILITY

As described in the foregoing, according to the present invention, the insertion interval for pilot signals can be determined accurately through detected results of time variation amount of channel response because: a reception means for receiving signals transmitted from a radio communication apparatus of another party; a channel time variation detection means for detecting the time variation amount of channel response using the signals received by the reception means; and a pilot signal insertion interval determination means for determining pilot signal insertion intervals using the detected time variation amount of channel response are comprised in a radio communication apparatus.

In addition, pilot signals can be inserted in pilot signal insertion intervals most optimum for the channel condition, based on the pilot signal insertion intervals determined from the detected result of time variation amount of channel response and transmitted, and communication throughput can be improved by eliminating redundant pilot signals because: a pilot signal insertion means for inserting pilot signals into information signals to be transmitted, based on the pilot signal insertion intervals determined by the pilot signal insertion interval determination means; and a transmission means for transmitting the information signals into which pilot signals have been inserted to the radio communication apparatus of another party are further comprised.

**Claims**

1. A radio communication apparatus, which can perform radio communication with a communication terminal device of another party, comprising:

   a reception means for receiving signals transmitted from the radio communication apparatus of another party;
   a channel time variation detection means for detecting the time variation amount of channel response using the signals received by the reception means; and
   a pilot signal insertion interval determination means for determining pilot signal insertion intervals using the detected time variation amount of channel response.

2. The radio communication apparatus according to claim 1 comprising:

   a pilot signal insertion means for inserting said pilot signals into information signals to be transmitted, based on said pilot signal insertion intervals determined by said pilot signal insertion interval determination means; and
   a transmission means for transmitting information signals into which said pilot signals have been inserted to said radio communication apparatus of another party.

3. The radio communication apparatus according to claim 1 comprising:

   an information signal division means for dividing said information signals to be transmitted based on said pilot signal insertion intervals determined by said pilot signal insertion interval determination means;
   a pilot signal insertion means for inserting said pilot signals into post-division information signals which have been divided by the information signal division means; and
a transmission means for transmitting said information signals into which pilot signals have been inserted to said radio communication apparatus of another party

4. The radio communication apparatus according to claim 1 comprising:

an information signal processing means for processing post-division information signals which have been divided by said information signal division means;
an information signal merging means for merging post-division information signals which have been processed by said information signal processing means;
a pilot signal insertion means for inserting said pilot signals into information signals which have been merged by said information signal merging means, based on said pilot signal insertion interval determined by said pilot signal insertion interval determination means;
and a transmission means transmitting said information signals into which pilot signals have been inserted to said radio communication apparatus of another party.

5. The radio communication apparatus according to claim 4 comprising: a division length determination means for determining the division length of said information signals in said information signal division means; wherein
the division length determination means is constructed to enable determination of said information signal division length using said time variation amount of channel response.

6. The radio communication apparatus according to claim 1 comprising:

a first information signal division means for dividing said information signals to be transmitted;
an information signal processing means for processing post-division information signals which have been divided by said information signal division means;
an information signal merging means for merging post-division information signals processed by said information signal processing means;
a second information signal division means for dividing information signals merged by said information signal merging means, based on said pilot signal insertion interval determined by said pilot signal insertion interval determination means;
a pilot signal insertion means for inserting said pilot signals into post-division information signals which have been divided by the second information signal division means; and
a transmission means for transmitting said information signals into which pilot signals have been inserted to said radio communication apparatus of another party.

7. The radio communication apparatus according to claim 6 comprising:

a division length determination means for determining the division length of said information signals in said first information signal division means; wherein
the division length determination means is constructed to determine the division length of said information signals by using said time variation amount of channel response.

8. The radio communication apparatus according to claim 1 comprising a transmission means for transmitting said pilot signal insertion intervals to notify said radio communication apparatus of another party of said pilot signal insertion interval determined by said pilot signal insertion interval determination means.

9. The radio communication apparatus according to any of claim 1 to claim 8 wherein said channel time variation detection means is constructed so as to detect said time variation amount of channel response using signals known to both the transmitter side and the receiver side.

10. The radio communication apparatus according to any of claim 1 to claim 8 wherein said channel time variation detection means is constructed so as to detect said time variation amount of channel response using signals which are not known to at least one of either the transmitter side or the receiver side.

11. A radio communication method for a radio communication apparatus, which can perform radio communication with a communication terminal apparatus of another party, comprising:

a reception step for receiving signals transmitted from the radio communication apparatus of another party;

a channel time variation detection step for detecting time variation amount of channel response using signals received in the reception step;

and a pilot signal insertion interval determination step for determining said pilot signal insertion interval using said detected time variation amount of channel response.

**12.** The radio communication method according to claim 11 comprising:

a pilot signal insertion step for inserting said pilot signals into the information signals to be transmitted, based on said pilot signal insertion interval determined in said pilot signal insertion interval determination step; and a transmission step for transmitting said information signals into which pilot signals have been inserted to said radio communication apparatus of another party.

**13.** The radio communication method according to claim 11 comprising:

an information signal division step for dividing said information signals to be transmitted based on said pilot signal insertion intervals determined in said pilot signal insertion interval determination step;

a pilot signal insertion means for inserting said pilot signals into post-division information signals which have been divided in said information signal division step; and

a transmission means for transmitting said information signals to which pilot signals have been inserted to said radio communication apparatus of another party.

**14.** The radio communication method according to claim 11 comprising:

an information signal division step for dividing said information signals to be transmitted;

an information signal processing step for processing post-division information signals which have been divided in said information signal division step;

an information signal merging step for merging post-division information signals which have been processed in said information signal processing step;

a pilot signal insertion means for inserting said pilot signals into information signals which have been merged in said information signal merging step, based on said pilot signal insertion intervals determined in said pilot signal insertion interval determination step; and

a transmission method transmitting said information signals into which pilot signals have been inserted to said radio communication apparatus of another party.

**15.** The radio communication method according to claim 14 comprising a division length determination step for determining the division length of said information signals in said information signal division means using said time variation amount of channel response.

**16.** The radio communication method according to claim 11 comprising:

a first information signal division step for dividing said information signals to be transmitted;

an information signal processing step for processing post-division information signals which have been divided in said information signal division step;

an information signal merging step for merging post-division information signals processed in said information signal processing step;

a second information signal division step for dividing information signals merged by said information signal merging step, based on said pilot signal insertion interval determined in said pilot signal insertion interval determination step;

a pilot signal insertion step for inserting said pilot signals to post-division information signals which have been divided in said second information signal division step; and

a transmission step for transmitting said information signals into which pilot signals have been inserted to said radio communication apparatus of another party.

**17.** The radio communication method according to claim 16 comprising a division length determination step for determining the division length of said information signals in said first information signal division step by using said time variation amount of channel response.

**18.** The radio communication method according to claim 11 comprising a transmission step for transmitting said pilot signal insertion interval to notify said radio communication apparatus of another party of said pilot signal insertion interval determined by said pilot signal insertion interval determination means.

**19.** The radio communication method according to any of claim 11 to claim 18 wherein said channel time variation detection step detects said time variation amount of channel response using signals known to both the transmitter side and the receiver side.

**20.** The radio communication method according to any of claim 11 to claim 18 wherein said channel time variation detection step detects said time variation amount of channel response using signals which are not known to at least one of either the transmitter side and the receiver side.

# FIG. 1

100 RADIO COMMUNICATION APPARATUS

# FIG. 2

100 RADIO COMMUNICATION APPARATUS

EP 1 569 401 A1

**FIG. 3A**

| DATA |
|---|

**FIG. 3B**

| M | DATA |  | M | DATA |  | M | DATA |

DIVISION BASED ON PILOT SIGNAL INSERTION INTERVAL

DIVISION BASED ON PILOT SIGNAL INSERTION INTERVAL

DIVISION BASED ON PILOT SIGNAL INSERTION INTERVAL

**FIG. 3C**

| H | P | M | DATA |  | H | P | M | DATA |  | H | P | M | DATA |

H:PHY HEADER
P:PILOT SIGNAL
M:MAC HEADER

EP 1 569 401 A1

# FIG. 4

TRANSMISSION RF SECTION 6

PHY TRANSMISSION SECTION 12

DATA MERGING SECTION 13

MAC DIVISION SECTION 11

TRANSMISSION DATA

5

9

RECEPTION RF SECTION 1

CHANNEL TIME VARIATION DETECTION SECTION 3

PILOT SIGNAL INSERTION INTERVAL DETERMINATION SECTION 4

DEMODULATION SECTION 2

RECEPTION DATA

100 RADIO COMMUNICATION APPARATUS

EP 1 569 401 A1

# FIG. 5A

| DATA |
|------|

# FIG. 5B

| M | DATA |   | M | DATA |   | M | DATA |
|---|------|---|---|------|---|---|------|

# FIG. 5C

| M | DATA | M | DATA | M | DATA |
|---|------|---|------|---|------|

# FIG. 5D

DATA

| H | P | M | DATA | M |   | P | DATA | M | DATA | P | DATA |
|---|---|---|------|---|---|---|------|---|------|---|------|

←———————————→ ←———————————————→

PILOT SIGNAL
INSERTION
INTERVAL

PILOT SIGNAL
INSERTION
INTERVAL

H:PHY HEADER
P:PILOT SIGNAL
M:MAC HEADER

22

# FIG. 6

100 RADIO COMMUNICATION APPARATUS

EP 1 569 401 A1

## FIG. 7A

## FIG. 7B

DIVISION INTO MAC
DIVISION LENGTH
DETERMINED BY MAC
DIVISION LENGTH
DETERMINATION
SECTION 7

DIVISION INTO MAC
DIVISION LENGTH
DETERMINED BY MAC
DIVISION LENGTH
DETERMINATION
SECTION 7

DIVISION INTO MAC
DIVISION LENGTH
DETERMINED BY MAC
DIVISION LENGTH
DETERMINATION
SECTION 7

## FIG. 7C

## FIG. 7D

DATA

PILOT SIGNAL
INSERTION
INTERVAL

PILOT SIGNAL
INSERTION
INTERVAL

H:PHY HEADER
P:PILOT SIGNAL
M:MAC HEADER

# FIG. 8

EP 1 569 401 A1

100 RADIO COMMUNICATION APPARATUS

FIG. 9A

DATA

FIG. 9B

| M | DATA |   | M | DATA |   | M | DATA |

FIG. 9C

| M | DATA | M | DATA | M | DATA |

FIG. 9D

DATA                    DATA

| M | DATA |   | | M | DATA |   | | | M | DATA |

DIVISION BASED ON
PILOT SIGNAL
INSERTION
INTERVAL

DIVISION BASED ON
PILOT SIGNAL
INSERTION
INTERVAL

DIVISION BASED ON
PILOT SIGNAL
INSERTION
INTERVAL

FIG. 9E

DATA                    DATA

| H | P | M | DATA |   | H | P | | M | DATA |   | H | P | | M | DATA |

H:PHY HEADER
P:PILOT SIGNAL
M:MAC HEADER

# FIG. 10

100 RADIO COMMUNICATION APPARATUS

# FIG. 11A

# FIG. 11B

# FIG. 11C

# FIG. 11D

# FIG. 11E

H:PHY HEADER
P:PILOT SIGNAL
M:MAC HEADER

# FIG. 12

100 RADIO COMMUNICATION APPARATUS

EP 1 569 401 A1

# FIG. 13

# FIG. 14

t=t₀

t=t₁

t=t₂

STANDARD SIGNAL S

TRAJECTORY OF
STANDARD SIGNAL S
AFTER RECEPTION

TRANSMISSION
STATION CONSTANTLY
TRANSMITS STANDARD
SIGNAL S

RECEIVED
SIGNALS AT TIME
t₀, t₁, AND t₂

CHANGES OF STANDARD SIGNAL S
ACCORDING TO MOVEMENT OF STATION
(RECEPTION POINT)

EP 1 569 401 A1

**FIG. 15**

# FIG. 16

## INTERNATIONAL SEARCH REPORT

International application No.

PCT/JP03/14331

**A. CLASSIFICATION OF SUBJECT MATTER**
Int.Cl⁷ H04L27/00

According to International Patent Classification (IPC) or to both national classification and IPC

**B. FIELDS SEARCHED**

Minimum documentation searched (classification system followed by classification symbols)
Int.Cl⁷ H04L27/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br><br>A | JP 2001-339363 A  (Matsushita Electric Industrial Co., Ltd.),<br>07 December, 2001 (07.12.01),<br>Par. Nos. [0056] to [0067]; Fig. 1<br>(Family: none) | 1,2,8,9,11,<br>12,18,19<br>3,4,6,10,13,<br>14,16,20<br>5,7,15,17 |
| Y | JP 11-331234 A  (NEC Corp.),<br>30 November, 1999 (30.11.99),<br>Par. Nos. [0016] to [0066]; Fig. 2<br>(Family: none) | 3,6,13,16 |
| Y | JP 09-064925 A  (Toshiba Corp.),<br>07 March, 1997 (07.03.97),<br>Par. Nos. [0011] to [0012]; Fig. 1<br>(Family: none) | 4,6,14,16 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 19 January, 2004 (19.01.04) | 03 February, 2004 (03.02.04) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

| International application No. |
| --- |
| PCT/JP03/14331 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2002-232387 A  (Toshiba Corp.),<br>16 August, 2002 (16.08.02),<br>Par. Nos. [0058] to [0061]<br>(Family: none) | 10,20 |

Form PCT/ISA/210 (continuation of second sheet) (July 1998)